# EUROPÄISCHE PATENTSCHRIFT

(11) **EP 1 128 102 B1**
(45) Veröffentlichungstag und Bekanntmachung des Hinweises auf die Patenterteilung: **10.11.2004**
(21) Anmeldenummer: 01103922.9
(22) Anmeldetag: 17.02.2001
(51) Int. Cl.: F16K 1/30

(54) **Ventil mit Kupplungselementen**
Valve with coupling elements
Soupape avec des éléments de raccord

(30) Priorität: 25.02.2000 DE 10008529
(43) Veröffentlichungstag der Anmeldung: 29.08.2001
(73) Patentinhaber: Felten & Guilleaume AG, 51063 Köln (DE)
(72) Erfinder: Dirks, Rolf, 47877 Willich (DE); Naber, Klaus, 47906 Kempen (DE)

(56) Entgegenhaltungen:
- BE-A- 363 976
- FR-A- 1 286 061
- GB-A- 732 186
- GB-A- 1 117 169
- GB-A- 2 067 697
- US-A- 4 009 896

## Beschreibung

Die Erfindung betrifft ein Ventil mit Kupplungselementen für Anschlussteile an einem gasführenden Gehäuse, insbesondere mit geringem Gasdruck, nach dem 1. Anspruch und Verwendung dafür.

In der Technik werden vielfältig gasführende Gehäuse, Ventilstutzen und Kupplungselemente hierzu benötigt, die unterschiedliche Aufgabe erfüllen müssen. Zu solchen Aufgaben gehören: das Evakuieren des Gehäuses, das Füllen mit Gas, die Kontrolle der Dichtigkeit, die Kontrolle des Füllstandes, die Anbringung eines Manometers. Bei solchen Arbeitsgängen müssen am Ventilstutzen unterschiedliche genormte und auch ungenormte Anschlussteile (Anschluss für eine Vakuumpumpe, Schlauchverbindung für das Füllgas, ein Manometer, ein Verschlussstopfen, ein Adapter für Fremdventil, ein Adapter für Fremdanschluss etc.) angebracht und/oder untereinander gewechselt werden.

Es gibt unterschiedliche Ausbildungen eines Ventiles, bei dem ein rohrförmig ausgebildeter Ventilstutzen mit einer zylindrischen Aufnahmeöffnung für ein Anschlussteil ausgebildet und der Ventilstutzen am Gehäuse gasdicht anschraubbar ist. Im Ventilstutzen ist ein federbeaufschlagter Schliesseinsatz als Sperrorgan angeordnet, welcher unbetätigt den Strömungsweg schließt. Am Anschlussteil ist ein Betätigungselement für den Schliesseinsatz ausgebildet, welches nach Aufsetzen des Anschlussteils den Ventilweg öffnet. Solche Ausbildungen sind beispielsweise in den Schriften EP 13 393 B1 und DE-OS 30 36 141 aufgezeigt. Bei diesen auch als Verbindungskupplungen bezeichneten Anordnungen liegen aufwendige Ausbildungen der Kupplungselemente für Anschlusskörper vor. In der DE-OS 30 36 141 wird das Anschlussteil mit einer hohlzylindrisch ausgebildeten Spannzange gesichert, deren Innendurchmesser dem Durchmesser des zylindrischen Rohrstutzens des Ventilstutzens angepaßt ist und darüber verschiebbar beweglich ist.

Insbesondere für ein Ventil bei kleinem Gasdruck sind die Kupplungselemente in den genannten Schriften unnötig aufwendig konstruiert. Gasisolierte Schaltanlagen - für die das Ventil vorzugsweise ausgebildet ist - erhalten Füllungen (beispielsweise mit SF6) bis höchstens einem Druck von 1 bar. Als Beispiel einer Schaltanlage mit SF6-Gastank wird die DE 42 10 773 A1 genannt.

Eine Schnellkupplung für Rohrleitungselemente ist in der US 4,009,896 beschrieben. Es ist ein einschraubbares Sockelstück dargestellt mit einer zylindrischen Bohrung für die Aufnahme eines Anschlussteils. Über den Außenzylinder des Sockelstücks ist eine Überwurfkappe aufsteckbar, die ein hohlzylindrisches Anschlussteil fixiert. Am Sockelstück ist eine rechteckige Umfangsnut für das Eingreifen eines Lagesicherungsmittels für das Anschlussteil vorhanden, welches die Mantelfläche der Überwurfkappe durchgreift. Das Sockelstück der US 4,009,896 entspricht dem Ventilstutzen dieser Anmeldung.

Der in der US 4,009,896 beschriebene Gegenstand ist jedoch kein Ventil. Ein Ventil mit einschraubbarem Ventilstutzen ist demgegenüber in der GB 1,117,169 zu finden. Das Ventil dieser Veröffentlichung weist keine Schnellkupplung auf, doch entspricht der Schliesseinsatz des Ventils demjenigen dieser Anmeldung. Der Schliesseinsatz wird von einer Feder beaufschlagt und in Schließstellung gehalten. Mit einem Anschlussteil ist der Schliesseinsatz in Durchlassstellung bewegbar.

Es ist Aufgabe der Erfindung, ein Ventil mit Kupplungselementen für Anschlussteile vorzuschlagen, welches besonders auf kleine Gasdrücke optimiert ist.

Die Lösung wird in den Merkmalen des Hauptanspruchs wiedergegeben. Weitergehende Ausgestaltungen sind in den Unteransprüchen zu finden. Eine Verwendung eines Ventils mit Kupplungselementen wird außerdem beansprucht.

Der erfindungsgemäße Gegenstand hat eine Reihe von Vorteilen. Die Anschlussteile können ohne Schraubwerkzeug angebracht und gelöst werden. Das macht sich bei hohen Stückzahlen bemerkbar, die evakuiert und mit Gas gefüllt werden müssen.

Der Kem der Erfindung liegt darin, dass die Umfangsnut zur Aufnahme unterschiedlich dicker Lagesicherungsmittel mit einem sich nach außen erweiternden Profil ausgestattet ist.

Vorteilhafte Weiterbildungen der Erfindung sind in den Merkmalen der Unteransprüche angegeben und bestehen in folgenden Einzelheiten:

Die Tiefe der Nut ist vorzugsweise rechteckig; mindestens eine Außenkante der Nut ist beim Übergang zur Zylinderoberfläche konisch abgeschrägt; alternativ kann die Nut nach außen rechteckig erweitert sein.

Das Anschlussteil ist gasdicht aufsetzbar, daher ist an ihm ein Gasdichtungselement, beispielsweise ein in einer Nut liegender O-Ring, ausgebildet. Zur Sicherung des Sitzes des Anschlussteils auf dem Ventilstutzen wird eine zylindrische Überwurfkappe verwendet, welche Mittel zur Lagesicherung am Ventilstutzen umfaßt. Das Mittel zur Lagesicherung des Anschlussteils kann als Spannfeder oder als Sperrbolzen ausbildet sein. Spannfeder oder Sperrbolzen greifen über (mindestens) eine Nut in der Überwurfkappe in eine lageentsprechende Nut im Anschlussteil.

Der Sperrbolzen ist vorzugsweise federbeaufschlagt und mit zylindrischem Schaft ausbildet. Der Durchmesser des zylindrischen Schafts entspricht der (konischen oder rechteckigen) Aufweitung der Ringnut.

Die Abmessungen des Lagesicherungsmittels ist so gewählt, dass sein Aufbringen bzw. sein Entfernen leicht mit der Hand möglich ist, oder nur mit Einsatz eines einfachen Abziehwerkzeugs. Die Ringnut des Ventilstutzens weist eine Aufweitung auf, wodurch ermöglicht wird, unterschiedliche Lagesicherungsmittel einzusetzen, die sich in ihren Abmessungen unterscheiden. So kann beispielsweise ein erstes Lagesicherungsmittel (beispielsweise eine Federspange) passend für die Abmessungen der Nut bemessen sein und ein zweites Lagesicherungsmittel mit größerem Durchmesser (beispielsweise eine andere Federspange oder ein Bolzen) gewählt werden, so dass das zweite Lagesicherungsmittel mit der Aufweitung der Nut zusammenwirkt.

Die zylindrische Bohrung des Ventilstutzens ist für die Aufnahme des Zylinderbolzen eines von mehreren möglichen Anschlussteilen ausgebildet. Die zylindrische Bohrung hat eine relativ glatte Fläche. In die Bohrung werden Anschlussteile mit passendem Außendurchmesser eingeführt und durch ein Sicherungsmittel - wie zuvor angesprochen - gesichert. In der Zylinderbohrung ist das Verdrehen des Anschlussteils möglich. Um ein Anschlussteil, beispielsweise ein Manometer, gegen unbeabsichtigtes Verdrehen zu sichern, sollte im Zylinderbolzen des Anschlussteils mindestens ein O-Ring eingebracht sein. Mit dieser Maßnahme wird sichergestellt, dass sich die Lage des Anschlussteils in Bezug auf das Gehäuse beispielsweise durch Erschütterungen nicht mehr verändert. Das Anschlussteil behält dadurch seine einmal vorgegebene Einbaulage bei.

Der Schliesseinsatz ist für große Strömungsgeschwindigkeit (mit kleinem Strömungswiderstand) des Gases geformt. Der Schliesseinsatz wird von einer Kegelfeder beaufschlagt. Die Kegelfeder umgreift den gasraumseitigen zylindrischen Schaft des Schliesseinsatzes. Damit wirken Schliesseinsatz und Kegelfeder derart zusammen, dass die Kegelfeder auch bei Betätigung von einem Anschlussteil den Schliesseinsatz zentriert. Der Strömungsweg des Gases verläuft rings um den Schliesseinsatz herum, der von der Kegelfeder schwebend gehalten wird.

Vorzugsweise soll das Ventil in jeder der beschriebenen Ausgestaltungen für den Gastank einer SF6-Mittelspannungsschaltanlage Verwendung finden.

Mehrere Ausführungsbeispiele der Erfindung werden in den Figuren dargestellt. Sie zeigen im Einzelnen:
Fig. 1 einen Ventilstutzen mit aufgesetztem Manometer,
Fig. 2A ein Detail an der Ringnut,
Fig. 2B rechteckige Aufweitung der Ringnut,
Fig. 3 den Schliesseinsatz,
Fig. 4A einen Ventilstutzen mit Blindstopfen im senkrechten Schnitt,
Fig. 4B eine Federspange als Lagesicherungsmittel,
Fig. 5A einen Ventilstutzen mit Schlauchanschluss im senkrechten Schnitt,
Fig. 5B eine Überwurfkappe nach Fig. 5C im waagerechten Schnitt und
Fig. 5C die Überwurfkappe mit Sperrbolzen.

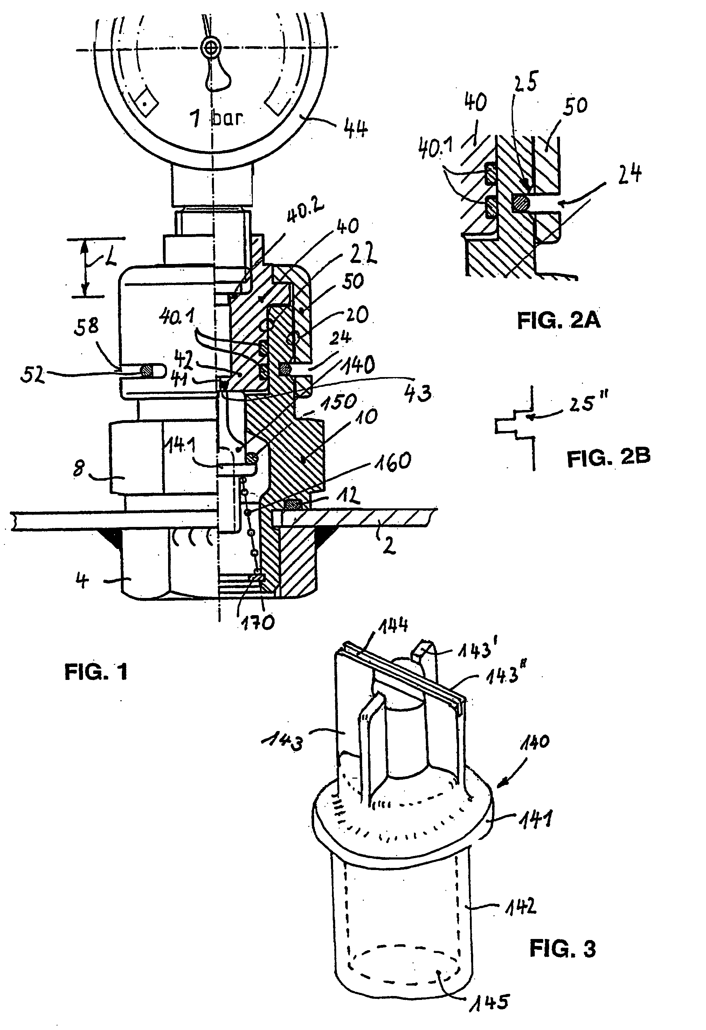

In der Fig. 1 ist im Teilschnitt ein Ventilstutzen 10 für ein Ventil an einem gasführenden Gehäuse 2 dargestellt. Der Ventilstutzen 10 trägt auf dem Anschlussteil 40 ein Manometer 44 für kleine Drücke. Der Ventilstutzen 10 wird an einer im Innern des Gehäuses 2 angeschweißten Mutter 4 eingeschraubt und mit einem O-Ring 12 gedichtet. Am Ventilstutzen ist ein Schlüsselsechskant 8 zum Angriff eines Schraubenschlüssels vorhanden. Im Ventilstutzen befindet sich ein in Schliessrichtung mit einer Kegelfeder 160 kraftbeaufschlagter Schliesseinsatz 140. Die Kegelfeder 160 stützt sich gegen einen Sprengring 170 ab und hält den Schliesseinsatz unter Spannung und in Geschlossen-Stellung.

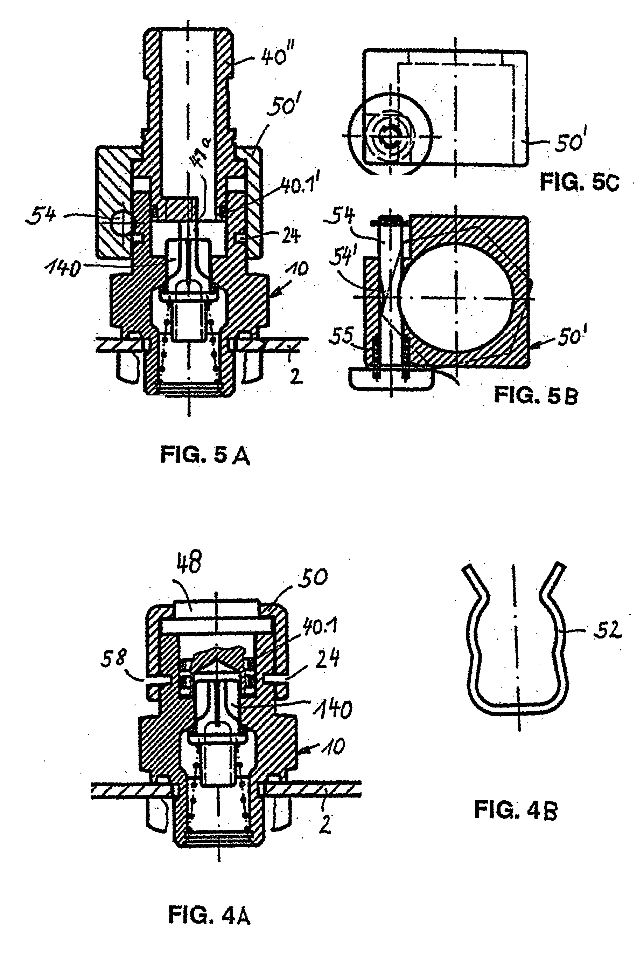

In der Aufnahmeöffnung 22 des Ventilstutzens in Form einer Zylinderbohrung können unterschiedliche Anschlussteile 40 eingeführt werden. In Fig. 1 trägt das Anschlussteil 40 ein Manometer 44. Anschlussteile können unterschiedliche Aufbaulängen L haben. Zur Lagesicherung des Anschlussteils 40,42 wird eine Überwurfkappe 50 eingesetzt. Die Überwurfkappe weist außen zwei Nuten 58 auf, die zueinander parallel liegen. Die Nuten 58 sind lagerichtig der Ringnut 24 im Ventilstutzen zugeordnet, so dass ein Sicherungselement 52 (siehe Fig. 4B) durch die Nuten 58 der Überwurfkappe 50 hindurchgreifen und in die Ringnut 24 eingreifen kann, wodurch die Position des Anschlussteils fixiert wird.

Um das Anschlussteil 40 passend zum Ventilstutzen zu gestalten, ist an jedem Anschlussteil passend zur Bohrung 22 ein Zylinder 42 ausgebildet. In der Zylinderoberfläche des Anschlussteils sind zwei Ringnuten 24 ausgebildet, in denen jeweils ein O-Ring 40.1 eingelegt ist. Die Ausbildung der Nutdimension und die O-Ring-Querschnitte sind so gewählt, dass das Anschlussteils gasdruckdicht aufsitzt. Weiterhin wird durch das Einlegen der O-Ringe eine gewisse Schwergängigkeit der Anschlussteils 40 im Ventilstutzen erreicht. Mit der erhöhten Reibung der O-Ringe kann eine Lagebestimmung des Anschlussteils vorgenommen werden. Unbeabsichtigte Drehungen lassen sich vermeiden.

Im Ventilstutzen sitzt der federkraftbeaufschlagte Schliesseinsatz 140. Der Schliesseinsatz verschließt mit der Kraft der Kegelfeder 160 das Ventil, so dass kein Gas austreten kann. Das Ventil läßt sich durch Aufsetzen oder Aufschrauben von entsprechenden Anschlussteilen 40 öffnen, bei denen jeweils ein Betätigungselement 41 für den Schliesseinsatz ausgebildet ist. Im Manometer-Anschlussteil 40 ist das Betätigungselement die gasraumseitige Fläche des Zylinders 42.

In den Fig. 2A und 2B sind im Detail vergrößert die rings umlaufende Nut 24 und ihre Erweiterungen (25,25") dargestellt. Mit der jeweiligen Ausgestaltung der Nut durch eine der Erweiterungen 25 (beidseitig konisch) oder 25" (rechteckige Aufweitung) können verschiedene Lagesicherungsmittel eingesetzt werden, die sich in ihrem Durchmesser unterscheiden können. Ein erstes Lagesicherungsmittel kann passend für die Tiefe der rechteckige Nut 24 und ein zweites Lagesicherungsmittel kann passend für die Erweiterungen gewählt werden. Durch die umlaufende Ausbildung der Nut 24 können aufgesetzte Anschluss- oder Lagesicherungsmittel in jeder Richtung drehbar gesichert werden.

Die Figuren 4B und 5 (5A, 5B, 5C) zeigen zwei unterschiedliche Sicherungselemente (52, 54). Fig. 4B zeigt eine Federspange 52, die in ihrer Dicke der Breite der Nuttiefe 24 angepaßt ist. In Fig. 5A bis 5C ist eine Überwurfkappe 50', die ein Anschlussteil übergreift, mit einem Sperrbolzen 54 dargestellt, dessen größerer Durchmesser der konischen Erweiterung 25 (in Fig. 2A) angepaßt ist. Der zylindrische Sperrbolzen 54 hat etwa in seiner Mitte ein taillenförmige Verringerung 54' seines Durchmessers. Der Sperrbolzen 54 wird mit der Feder 55 in einer Grundposition gehalten, in der sein Durchmesser in die konische Erweiterung des Ventilstutzens greift. Wird der Sperrbolzen 54 gegen die Kraft der Feder 55 eingedrückt, so gelangt die taillenförmige Verringerung 54' in den Bereich der konischen Erweiterung 25 und die Überwurfkappe 50' läßt sich vom Ventilstutzen lösen.

Wie schon erwähnt, schließt der Schliesseinsatz 140 mit der Kraft der Kegelfeder 160 den Ventilstutzen gasdicht ab. Mit einem Anschlussteil wird der Schliesseinsatz 140 gegen die Kraft der Kegelfeder 160 geöffnet. In Fig. 1 ist der Zylinderbolzen 42 des Anschlussteils 40 zu einem Betätigungselement (Bezugszeichen 41) verlängert, womit in der Einbaulage der Schliesseinsatz hinein gedrückt und das Ventil geöffnet wird. Gas kann ein- oder ausströmen.

In Fig. 4A ist ein Blindstopfen 48 dargestellt, der mit dem Schliesseinsatz 140 nicht in Berührung kommt. Der Blindstopfen hat kein Betätigungselement zum Schliesseinsatz. Mit dem Aufsetzen des Blindstopfens wird das Ventil nicht geöffnet.

Der Schliesseinsatz 140 (siehe Fig. 3) ist zylindersymmetrisch ausgebildet und hat senkrecht zu seiner Achse in seiner Mitte einen umlaufenden Ring 141. Ventilauslassseitig ist der Ring als umlaufende, gratfreie Dichtfläche zur Auflage eines O-Rings 150 ausgebildet. Gasraumseitig ist einen zylindrischen Schaft 142 vorhanden. Die Kegelfeder 160 umgreift den Schaft 142, stützt sich am umlaufenden Ring 141 gasraumseitig ab und zentriert den Schliesseinsatz in Offen-Stellung. Der Schaft 142 ist innen hohl (145) ausgebildet, wodurch sich sein Schwerpunkt bezüglich der Angriffsfläche für die Kegelfeder günstig verlagert. Ventilauslassseitig findet sich am Schliesseinsatz eine strömungsoptimierte Ausbildung. In Fig. 3 ist daher als Besonderheit eine Nut 144 erkennbar, die als Strömungskanal dient. Der Schliesseinsatz kann als Kunststoff-Spritzgussteil hergestellt sein.

Der Schliesseinsatz 140 ist gasauslassseitig mit kreuzförmig verlaufenden Stegen 143,143' versehen. Die Stege wirken je nach Einsatzfall jeweils mit den Betätigungselementen (41) an den verschiedenen Anschlussteile zusammen.

In Fig. 5A ist eine Stellung des als Schlauchanschluss ausgebildeten Anschlussteils 40" dargestellt. Das Anschlussteil befindet sich noch außerhalb seiner Endlage, der Schliesseinsatz 140 ist nicht betätigt. Das Ventil ist noch geschlossen. Der Sperrbolzen 54 liegt am Schaft des Ventilstutzens oberhalb der Nut 24 an, also außerhalb der Verriegelungsstellung. Der Schlauchanschluss 40" ist mit einem O-Ring 40.1' gedichtet. Am unteren Ende des Schlauchanschlusses 40" ist eine Nase 41 a mit einer bestimmten Länge als Betätigungselement ausgebildet, die mit dem Schliesseinsatz 140 (Stege 143',143") zusammenwirkt. In der tiefsten Stellung (Verriegelungsstellung) des Schlauchanschlusses 40" im Ventilstutzen bewegt die Nase 41a den Schliesseinsatz vollständig in die Offenstellung.

### Bezugszeichen

- 2: Gehäusewand
- 4: Mutter mit Innengewinde
- 8: Schlüsselsechskant
- 10: Ventilstutzen
- 12: O-Ring
- 140: Schliesseinsatz
- 141: Auflagefläche für O-Ring (Dichtfläche)
- 142: Zylindrischer Schaft am Schliesseinsatz
- 143: Ausformung
- 144: Nut als Strömungskanal
- 150: O-Ring
- 160: Kegelfeder
- 170: Sprengring

- 20: Zylinderfläche außen
- 22: Zylinderfläche innen
- 24: Ringnut
- 25: konische Erweiterung der Ringnut 24

- 40 40": Anschlussteile (Schlauchanschluss)
- 40.1: zwei O-Ringe - (erzeugen Schwergängigkeit)
- 40.2: O-Ring
- 41: Betätigungselement
- 41a: Nase
- 42: Zylinderbolzen
- 44: Manometer
- L: Aufbaulänge eines Anschlussteils
- 48: Blindstopfen
- 50, 50': Befestigungselement (Überwurfkappe)
- 52: Sicherungsfeder
- 54: Sperrbolzen
- 55: Feder
- 58: Nut passend zu Ringnut 24

## Patentansprüche

1. Ventil mit Kupplungselementen für Anschlussteile, wobei das Ventil aus einem zylindrisch ausgebildeten Ventilstutzen (10) und einem in dem Ventilstutzen (10) angeordneten Schließeinsatz (140) besteht, und der Ventilstutzen (10) an einem gasführenden Gehäuse (2) anschraubbar ist,
wobei der Schließeinsatz (140) von einer Kegelfeder (160) beaufschlagt und in Schließstellung gehalten wird und von einem Anschlussteil (40,40") in Durchlassstellung bewegbar ist; wobei an dem Ventilstutzen (10) eine zylindrische Bohrung (22) für die Aufnahme eines Anschlussteils (40,40") und ein Außenzylinder (20) zum Aufstecken einer hohlzylindrischen ein Anschlussteil (40,40") haltenden Überwurfkappe (50) ausgebildet sind,
**dadurch gekennzeichnet, dass** am Ventilstutzen (10) eine rechteckige Umfangsnut (24) für das Eingreifen eines Lagesicherungsmittels (52,54) für das Anschlussteil (40,40") vorhanden ist, welches die Mantelfläche der Überwurfkappe (50) durchgreift,
so dass die Umfangsnut (24) zur Aufnahme unterschiedlich dicker Lagesicherungsmittel (52, 54) mit einem sich nach außen erweiternden Profil (25,25") ausgestattet ist.

2. Ventil nach Anspruch 1, **dadurch gekennzeichnet, dass** die Tiefe der Umfangsnut (24) rechteckig ist, und nach außen eine konischen Aufweitung (25) aufweist.

3. Ventil nach Anspruch 1, **dadurch gekennzeichnet, dass** die Tiefe der Umfangsnut (24) rechteckig ist, und die Umfangsnut (24) nach außen rechteckig erweitert (25") ist.

4. Ventil nach einem der vorhergehenden Ansprüche, **dadurch gekennzeichnet, dass** das Lagesicherungsmittel (**52**) als Spannfeder (**52**) ausbildet ist.

5. Ventil nach einem der Ansprüche 1 bis 3, **dadurch gekennzeichnet, dass** das Lagesicherungsmittel (**54**) als mit einer Feder (**55**) beaufschlagter Sperrbolzen (**54**) mit zylindrischem Schaft ausbildet ist, wobei der Durchmesser des Sperrbolzens der außen liegenden Aufweitung (**25, 25"**) der Ringnut (**24**) entspricht.

6. Verwendung eines Ventils mit Kupplungselementen nach einem der vorhergehenden Ansprüche für das Gehäuse einer SF6-Mittelspannungsschaltanlage.

## Claims

1. A valve with coupling elements for connexion pieces, wherein the valve comprises a cylindrical valve connexion (10) and a closing insert (140) arranged in the valve connexion (10), and the valve connexion (10) is capable of being screwed onto a gas-conveying casing (2),
wherein the closing insert (140) is acted upon and held in the closed position by a conical spring (160) and is movable into the through-flow position by a connexion piece (40, 40"), wherein a cylindrical bore (22) for receiving a connexion piece (40, 40") and an outer cylinder (20) for fitting a hollow-cylindrical covering cap (50) holding a connexion piece (40, 40") are formed on the valve connexion (10),
**characterized in that** a rectangular peripheral groove (24) for the engagement of a position-securing means (52, 54) for the connexion piece (40, 40"), which engages through the outer face of the covering cap (50), is present on the valve connexion (10),
so that the peripheral groove (24) for receiving position-securing means (52, 54) of different thickness is provided with a profile (25, 25") enlarged towards the outside.

2. A valve according to Claim 1, **characterized in that** the depth of the peripheral groove (24) is rectangular, and has a conical widening (25) towards the outside.

3. A valve according to Claim 1, **characterized in that** the depth of the peripheral groove (24) is rectangular, and the peripheral groove (24) is enlarged (25") in a rectangular manner towards the outside.

4. A valve according to one of the preceding Claims, **characterized in that** the position-securing means (52) is constructed in the form of a tension spring (52).

5. A valve according to one of Claims 1 to 3, **characterized in that** the position-securing means (54) is constructed in the form of a lock bolt (54) acted upon by a spring (55) and having a cylindrical shaft, wherein the diameter of the lock bolt corresponds to the widening (25, 25"), situated on the outside, of the annular groove (24).

6. Use of a valve with coupling elements according to one of the preceding Claims for the casing of an SF6 medium-high-voltage switchgear system.

## Revendications

1. Soupape comportant des éléments de couplage pour des pièces de raccordement, la soupape étant constituée par un embout cylindrique de soupape (10) et un insert de fermeture (140) disposé dans l'embout de soupape (10), et l'embout de soupape (10) pouvant être vissé sur le boîtier (2) de guidage des gaz,
dans laquelle l'insert de fermeture (140) est chargé par un ressort conique (160) et est maintenu dans la position fermée, et est déplaçable au moyen d'une partie de raccordement (40, 40") dans la position passante,
dans laquelle sur l'embout de soupape (10) sont formés un perçage cylindrique (22) servant à loger une pièce de raccordement (40, 40") et un cylindre extérieur (20) prévu pour l'enfichage du capot-raccord cylindrique creux (5) qui retient une pièce de raccordement (40, 40"),
**caractérisée en ce que** sur l'embout de soupape (10) est présente une gorge circonférentielle rectangulaire (24) pour l'engagement d'un moyen de blocage en position (52, 54) pour la pièce de raccordement (40, 40"),
de sorte que la gorge circonférentielle (24) est agencée de manière à recevoir des moyens de blocage en position (52, 54) ayant des épaisseurs différentes, comportant un profil (25 , 25") qui s'élargit vers l'extérieur.

2. Soupape selon la revendication 1, **caractérisée en ce que** la partie de fond de la gorge circonférentielle (24) est rectangulaire et possède un élargissement conique (25) en direction de l'extérieur.

3. Soupape selon la revendication 1, **caractérisée en ce que** la partie de fond de la gorge circonférentielle (24) est rectangulaire et que la gorge circonférentielle 24 s'élargit (25") vers l'extérieur avec une forme rectangulaire.

4. Soupape selon l'une des revendications précédentes, **caractérisée en ce que** les moyens de blocage en position (52) sont agencés sous la forme d'un ressort de serrage (52).

5. Soupape selon l'une des revendications 1 à 3, **caractérisée en ce que** les moyens de blocage en position (54) sont agencés sous la forme d'un goujon de blocage (54) chargé par un ressort (55) et possédant une tige cylindrique, le diamètre du boulon de blocage correspondant à l'élargissement extérieur (25, 25") de la gorge annulaire (24).

6. Utilisation d'une soupape comportant des éléments de couplage selon l'une des revendications précédentes pour le boîtier d'une installation de commutation à moyenne tension à SF6.
